# EUROPEAN PATENT SPECIFICATION

(11) **EP 2 169 932 B1**
(45) Date of publication and mention of the grant of the patent: **29.12.2010**
(21) Application number: 09171461.8
(22) Date of filing: 28.09.2009
(51) Int. Cl.: H04M 15/00, H04M 17/00, H04W 4/24

(54) **Method, apparatus and system for charging**
Verfahren, Vorrichtung und System zum Laden
Procédé, appareil et système de chargement

(30) Priority: 28.09.2008 CN 200810166964
(43) Date of publication of application: 31.03.2010
(73) Proprietor: Huawei Technologies Co., Ltd., Longgang District, Shenzhen Guangdong 518129 (CN)
(72) Inventor: Zhou, Weirong, 518129, Shenzhen Guangdong (CN); Yang, Feng, 518129, Shenzhen Guangdong (CN)
(74) Representative: Körber, Martin Hans

(56) References cited:
- WO-A-98/56160
- WO-A-2009/108188
- CN-A- 101 141 267
- US-B1- 7 120 688

## Description

### FIELD OF THE PRESENT INVENTION

The present invention relates to the field of communication technology, and in particularly, to a method, apparatus and system for charging.

### BACKGROUND

An Online Charging System (OCS) is first proposed in 3GPP R5. With the continuous development and convergence of voice service and data service, conventional charging systems can't meet the need. Conventional Service Control Point (SCP) can only handle the fee of voice service, and there exists overdraft risk in a post-charging system or a quasi real time system. In the event of introducing high-value-added service, the defaulting risk is increasing. The defaulting risk can be better controlled by the OCS though time-sliced charging technology.

In the prior art, an SCP applies to an OCS for a communication time slice. The OCS reserves some fee for use by a voice service call, and sends a time slice to the SCP. The SCP sets a time interval according to the time slice, and delivers an Apply Charge (AC) including the time interval to a Service Switch Point (SSP). The SSP starts timing according to the time interval after receiving the AC, sends an Apply Charge Report (ACR) to the SCP when the time interval is due, and terminates the timing. After receiving the ACR, the SCP applies to the OCS for a new time slice, and sends a new AC to the SSP according to the new time slice. After receiving the new AC, the SSP restarts timing. The process repeats until the user hangs up the call or the last time slice is exhausted.

In the process of implementing the present invention, at least the following problems are found out in the prior art by the inventors.

In the prior art, the SSP starts timing upon receiving an AC from the SCP each time, and terminates timing upon returning an ACR to the SCP. Timing is not performed until a new AC is received from the SCP, while the user terminal is still served by the SSP during the interval between timings. The interval between timings is the error time value in time length generated in the interaction process between the SSP and the SCP and between the SCP and the OCS for a Charging Request interaction process. The time during which the user terminal actually uses the service is the summation of the time slice and the error time value in time length for a Charging Request interaction process, which leads to error in the computation of user service.
WO 98/56160A discloses a method for use in handling parallel transactions on a telephone subscriber's pre-paid account, comprising the steps of: responsive to receipt of a first transaction request associated with the subscriber's pre-paid account, withdrawing a first portion of a value in the subscriber's pre-paid account; allocating said first portion to said first transaction request; processing a first transaction in response to said first transaction request; responsive to receipt of a second transaction request associated with the subscriber's pre-paid account, requesting approval of a withdrawal of a second portion of said value in the subscriber's pre-paid account, said value depleted by all or some of said first portion; and processing, in parallel with said first transaction, a second transaction in response to said second transaction request if said requesting approval step is approved.

### SUMMARY

Embodiments of the present invention provide a method, apparatus and system for charging, in order to solve the charge error problem caused by the time error due to the interval between timings.

An embodiment of the present invention provides a method for online charging, including:

receiving, by a service switch device, a first time slice from a service control device;

timing, by the service switch device, according to the first time slice;

sending, by the service switch device, Charging Request information to the service control device at a first time point when the timing passes a first time length corresponding to the first time slice;

receiving, by the service switch device, a second time slice from the service control device; and

timing, by the service switch device, by using the first time point as a starting point for the second time slice.

An embodiment of the present invention provides a method for online charging, including:

acquiring, by a service control device, an error time value in time length for a single Charging Request interaction process;

requesting, by the service control device, a Charging Center to charge, and reserving a first time slice according to a time length returned by the Chargeing Center;

calculating, by the service control device, a second time slice according to the first time slice and the error time value;

sending, by the service control device, the second time slice to a service switch device, so that the service switch device performs timing according to the second time slice.

An embodiment of the present invention provides a service switch device, including:

a receiving module, adapted to receive a time slice from a service control device, wherein the time slice comprises a first time slice and a second time slice;

a timing module, adapted to perform timing according to the time slice received by the receiving module;

a sending module, adapted to send Charging Request information to the service control device at a time point corresponding to the time slice when the timing of the timing module passes a time length corresponding to the time slice.

An embodiment of the present invention provides a system for charging which includes a service switch device and a service control device.

The service switch device is adapted to receive a first time slice from the service control device, perform timing according to the first time slice, send Charging Request information to the service control device at a first time point when the timing indicates that a first time length corresponding to the first time slice is due, receive a second time slice from the service control device, and perform timing by using the first time point as a starting point for the second time slice.

An embodiment of the present invention provides a service control device, including:

an acquiring module, adapted to acquire an error time value in time length for a single Charging Request interaction process;

a reserving module, adapted to request a Charging Center to charge, and reserve a first time slice according to a time length returned by the Charging Center;

a calculating module, adapted to calculate a second time slice according to the first time slice reserved by the reserving module and the error time value acquired by the acquiring module; and

a sending module, adapted to send the second time slice calculated by the calculating module to a service switch device, so that the service switch device performs timing according to the second time slice.

An embodiment of the present invention provides a system for charging, which includes a service switch device and a service control device.

The service control device is adapted to acquire an error time value in time length for a single Charging Request interaction process, request a Charging Center to charge and reserve a first time slice according to a time length returned by the Charging Center, calculate a second time slice according to the first time slice and the error time value, and send the second time slice to the service switch device, so that the service switch device performs timing according to the second time slice.

The technical solutions of the embodiments of the present invention have the following advantages: timing is performed by using the first time point, at which the Charging Request information is sent to the service control device, as the starting point of the second time slice, in this way, the charge error problem caused by the time error due to the interval between timings in the prior art is resolved.

### BRIEF DESCRIPTION OF THE DRAWINGS

To illustrate the technical solutions of the embodiments of the present invention more explicitly, drawings provided in the description of the embodiments will be briefly introduced in the following. It will be readily apparent to those skilled in the art that the drawings in the following description are only several embodiments of the present invention, and other drawings may be derived according to these drawings without paying creative work.

Fig. is a flowchart of a charging method according to an embodiment of the present invention;

Fig.2 is a flowchart of a charging method according to an embodiment of the present invention;

Fig.3 is a block diagram of a charging system according to an embodiment of the present invention;

Fig.4 is a block diagram of a charging system according to an embodiment of the present invention;

Fig.5 is a schematic diagram illustrating a typical networking structure of a time-sliced charging system according to an embodiment of the present invention;

Fig.6 is a flowchart of a time-sliced charging method according to an embodiment of the present invention;

Fig.7 is a flowchart of a method for implementing time-sliced charging in the case that a user hangs up to terminate a call according to an embodiment of the present invention;

Fig.8 is a flowchart of a scheme for cutting off a call when the credit limit of a user is exhausted according to an embodiment of the present invention;

Fig.9 is a flowchart of a method for implementing time-sliced charging in the case that a user hangs up to terminate a call according to an embodiment of the present invention;

Fig.10 is a flowchart of a scheme for cutting off a call when the credit limit of a user is exhausted according to an embodiment of the present invention;

Fig.11 is a flowchart of a method for implementing time-sliced charging in the case that a user hangs up to terminate a call according to an embodiment of the present invention; and

Fig.12 is a flowchart of a scheme for cutting off a call when the credit limit of a user is exhausted according to an embodiment of the present invention.

### DETAILED DESCRIPTION

Embodiments of the present invention provide a method, apparatus and system for charging, in order to solve the charge error problem caused by the time error due to the interval between timings in the prior art.

The technical solutions according to the embodiments of the present invention will be explicitly and fully described hereafter in connection with the drawings in the embodiments of the present invention. It is apparent that the described embodiments intend to illustrate the present invention, but not intend to limit the present invention. For those skilled in the art, any other embodiments derived based on the embodiments of the present invention without creative work should all pertain to the scope of the present invention.

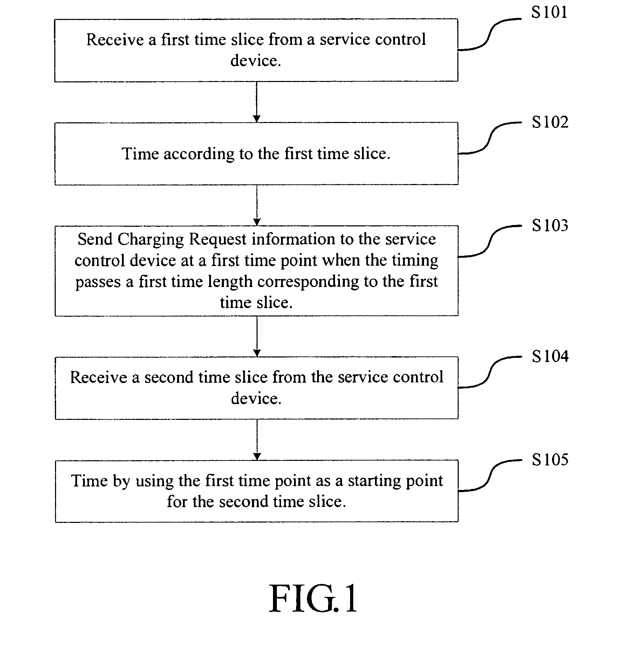

Fig. 1 illustrates a flowchart of a charging method according to an embodiment of the present invention. The method includes the following steps.

S101: Receiving a first time slice from a service control device.

S102: Timing according to the first time slice.

S103: Sending Charging Request information to a service control device at a first time point when the timing passes a first time length corresponding to the first time slice.

After sending the Charging Request information to the service control device at the first time point, the method further includes: the service control device receives the Charging Request information, sets a second time slice according to the charge by a Charging Center, and sends the second time slice to a service switch device.

S104: Receiving the second time slice from the service control device.

S105: Timing by using the first time point as a starting point for the second time slice.

After timing by using the first time point as a starting point for the second time slice, the method further includes the following: The second time slice is the last time slice available to the user; when the timing passes the last time length corresponding to the last time slice, the Charging Request information is sent to the service control device, and the service control device terminates the communication service according to the Charging Request information.

The technical solution of the embodiment of the present invention has the following advantages: The timing adopts the first time point, at which Charging Request information was sent to the service control device, as the starting point for the second time slice; in this way, the charge error problem caused by the time error due to the interval between timings in the prior art is resolved.

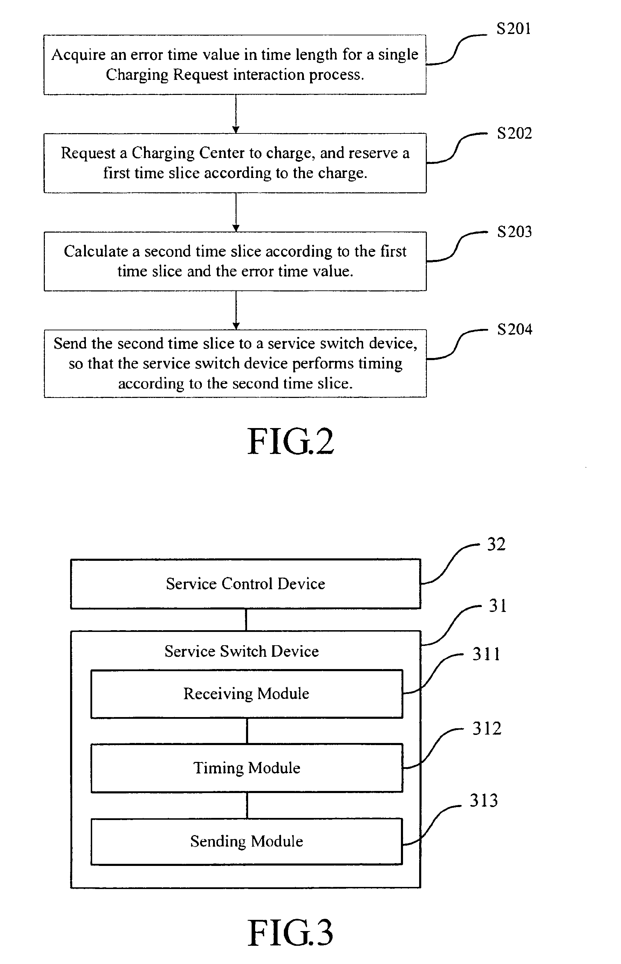

Fig.2 illustrates a flowchart of a charging method according to an embodiment of the present invention. The method includes the following steps.

S201: Acquiring an error time value in time length for a single Charging Request interaction process.

The error time value in time length for a single Charging Request interaction process includes the error time value in time length due to the interaction with a Charging Center and the error time value in time length due to the interaction with the service switch device.

S202: Requesting a Charging Center to charge, and reserving a first time slice according to the charge.

S203: Calculating a second time slice according to the first time slice and the error time value.

Calculating the second time slice according to the first time slice and the error time value includes: calculating a difference value between the first time slice and the error time value, and using the difference value as the second time slice.

S204: Sending the second time slice to a service switch device to enable the service switch device to time according to the second time slice.

After sending the second time slice to the service switch device, the method further includes: the second time slice is the difference value between the last time slice available to the user and the error time value, Charging Request information is received from the service switch device, and the communication service is terminated according to the Charging Request information.

The technical solution of the embodiment of the present invention has the following advantages: the second time slice is calculated from the first time slice and the error time value so that the service switch device performs timing according to the second time slice, in this way, the charge error problem caused by the time error due to the interval between timings in the prior art.

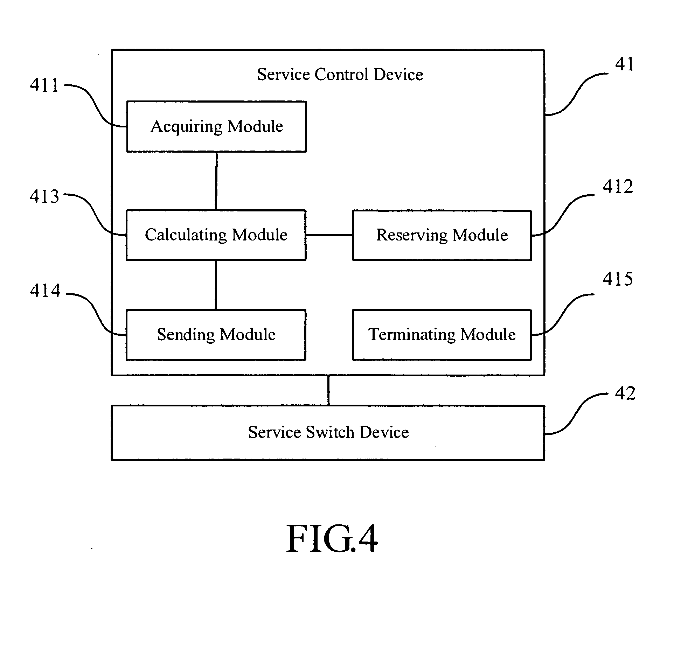

Corresponding to the methods provided in the embodiments of the present invention as shown in Fig.1 and Fig.2, charging systems are provided in two embodiments of the present invention as shown in Fig.3 and Fig.4 respectively. The following is the detailed description.

Fig.3 illustrates a block diagram of a charging system provided in an embodiment of the present invention based on the method provided in the embodiment of the present invention as shown in Fig.1. The system includes a service switch device 31 and a service control device 32.

The service switch device 31 is adapted to receive a first time slice from the service control device 32, perform timing according to the first time slice, send Charging Request information to the service control device 32 at a first time point when the timing passes a first time length corresponding to the first time slice, receive a second time slice from the service control device 32, perform timing by using the first time point as a starting point for the second time slice.

The service switch device 31 includes a receiving module 311 adapted to receive a time slice from the service control device 32, where the time slice includes a first time slice and a second time slice; a timing module 312 adapted to perform timing according to the time slice received by the receiving module 311; a sending module 313 adapted to send Charging Request information to the service control device 32 at a time point corresponding to the time slice when the timing of the timing module 312 passes a time length corresponding to the time slice.

The second time slice is the last time slice available to the user. The sending module 313 is specifically adapted to send Charging Request information to the service control device 32 when the timing passes the last time length corresponding to the last time slice, so that the service control device 32 terminates the communication service according to the Charging Request information.

The technical solution of the embodiment of the present invention has the following advantages: The timing adopts the first time point, at which Charging Request information is sent to the service control device, as the starting point for the second time slice; in this way, the charge error problem caused by the time error generated due to the interval between timings in the prior art is resolved.

Fig.4 illustrates a block diagram of a charging system provided in an embodiment of the present invention based on the method provided in the embodiment of the present invention as shown in Fig.2. The system includes a service control device 41 and a service switch device 42.

The service control device 41 is adapted to acquire an error time value in time length for a single Charging Request interaction process, request a Charging Center to charge and reserve a first time slice according to the charge, calculate a second time slice according to the first time slice and the error time value, and send the second time slice to the service switch device 42, so that the service switch device 42 performs timing according to the second time slice.

The service control device 41 includes an acquiring module 411 adapted to acquire the error time value in time length for a single Charging Request interaction process; a reserving module 412 adapted to request a Charging Center to charge and reserve a first time slice according to the charge; a calculating module 413 adapted to calculate a second time slice according to the first time slice reserved by the reserving module 412 and the error time value acquired by the acquiring module 411; and a sending module 414 adapted to send the second time slice calculated by the calculating module 413 to the service switch device 42, so that the service switch device 42 performs timing according to the second time slice.

The error time value in time length for a single Charging Request interaction process further includes the error time value in time length due to the interaction with the Charging Center and the error time value in time length due to the interaction with the service switch device.

The calculating module 413 is specifically adapted to calculate the difference value between the first time slice and the error time value, and take the difference value as the second time length.

The second time slice is the difference value between the last time slice available to the user and the error time value.

The service control device 41 further includes a terminating module 415 adapted to receive Charging Request information from the service switch device 42, and terminate the communication service according to the Charging Request information.

The technical solution of the embodiment of the present invention has the following advantages: The second time slice is calculated according to the first time slice and the error time value and the service switch device times according to the second time slice, in this way, the charge error problem caused by the time error due to the interval between timings in the prior art is resolved.

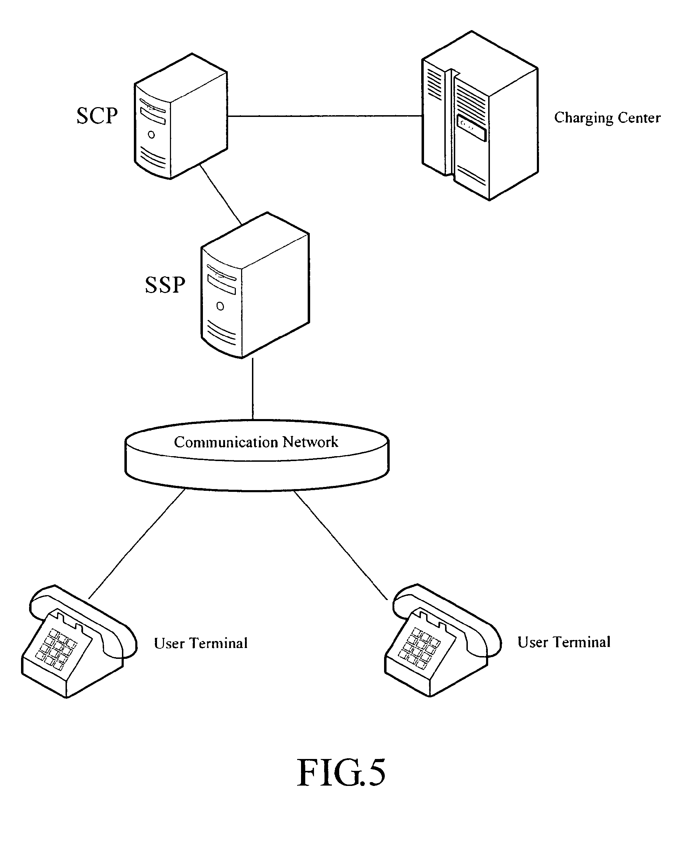

Fig.5 illustrates a schematic diagram for typical networking of a time-sliced charging system in a specific scenario, according to an embodiment of the present invention.

A Charging Center (such as, on line charge system, OCS) is adapted to implement the charging ability of time-sliced charging. The function of the Charging Center is similar to the Charging Center in the aforementioned embodiments of the present invention.

A SCP is adapted to control the time length of the time slice. The function of the SCP is similar to the service control device in the aforementioned embodiments of the present invention.

An SSP is adapted to perform timing for the time length of the time slice. The function of the SSP is similar to the service switch device in the aforementioned embodiments of the present invention.

Further, the Charging Center and the SCP may be incorporated into one entity. Such variation also falls into the protection scope of the present invention.

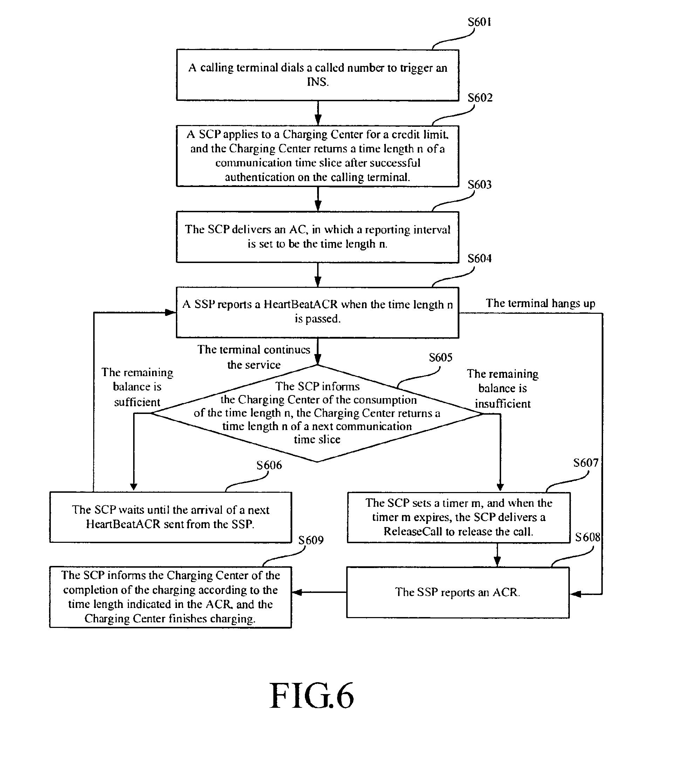

Fig.6 illustrates a flowchart of a time-sliced charging method provided in an embodiment of the present invention, based on the typical networking structure of the time-sliced charging system provided in the above embodiment. The method includes the following steps.

S601: A calling terminal dials a called number to trigger an Intelligent Network Service (INS).

S602: A SCP applies to a Charging Center for a credit limit, and the Charging Center returns a time length n of a communication time slice after successful authentication on the calling terminal.

The size of the time length n may be specifically predetermined.

S603: The SCP delivers an AC, in which a reporting interval is set to be the time length n.

S604: An SSP reports a HeartBeatACR when the time length n is passed.

If the terminals performing the communication service continue the service, then proceeding to S605.

If any of the terminals performing the communication service hangs up, then proceeding to S608.

S605: The SCP informs the Charging Center of the consumption of the time length n, the Charging Center charges and then returns a time length n of a next communication time slice.

If the remaining balance is enough, the Charging Center returns a time length n of a complete communication time slice, then proceeding to S606.

If the remaining balance is not enough, the Charging Center returns an actual time length m and informs the SCP that it is the last time slice, then proceeding to S607.

S606: The SCP waits until the arrival of a next HeartBeatACR sent from the SSP, then returning to S604.

S607: The SCP sets a timer m, and when the timer m expires, the SCP delivers a ReleaseCall to release the call.

S608: The SSP reports an ACR.

S609: The SCP informs the Charging Center of the completion of the charging according to the time length indicated in the ACR, and the Charging Center finishes charging.

It should be noted that, if the step S607 is not performed, then the SCP delivers a ReleaseCall to release the call, this also falls into the protection scope of the present invention.

To further illustrate the technical solutions of the present invention, the specific implementing flow of the present invention is further illustrated in the following embodiment of the present invention.

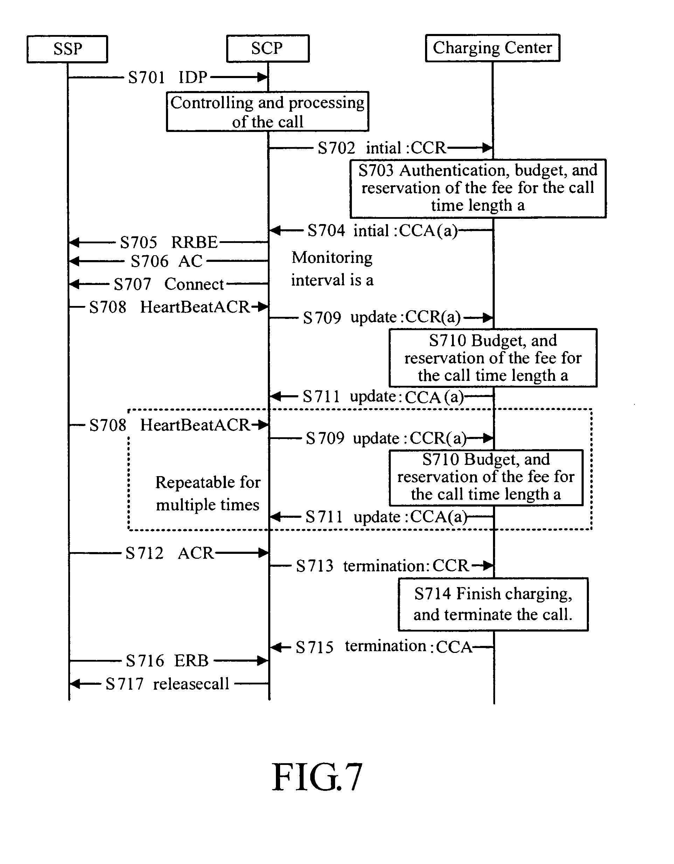

Fig.7 illustrates a flowchart of a method for implementing time-sliced charging in the case that a user hangs up to terminate a call according to an embodiment of the present invention.

For simplicity, the communication between a Charging Center and an SCP is illustrated, for example, in accordance with Diameter Credit-Control (DCC) protocol. The "initial" represents an Initial-Credit-Control-Request, the "update" represents an Update-Credit-Control-Request, and the "termination" represents a Terminate-Credit -Request. The user normally hangs up to terminate the call, and the signaling interaction is specifically shown in Fig.7.

S701: An SSP triggers a service, and reports an Initial Detect Point (IDP) to an SCP.

S702: The SCP initiates an Initial-Credit-Control-Request (initial CCR) to a Charging Center.

S703: The Charging Center performs authentication on the user, calculates a time length a of a communication time slice, and reserves the fee for the time length a.

S704: The Charging Center sends to the SCP an Initial-Credit-Control- Answer (initial CCA(a)), which includes the time length a.

S705: The SCP delivers an Event Detection Point (EDP) event monitor, such as an RRBE (Request Report BCSM (Basic Call State Model) Event).

S706: The SCP delivers an AC, in which the reporting interval is set to be the time length a.

S707: The SCP delivers a Connect message to connect the called party. After the called party unhooks to accept the call, the connection establishment of communication service is completed.

S708: When the time length of the call reaches the time length a, the SSP reports a HeartBeatACR to the SCP.

S709: The SCP sends a Update-Credit-Control-Request (update CCR(a)) message to the Charging Center, and informs the Charging Center of the consumption of the time length a.

S710: The Charging Center updates the credit control, and reserves the fee for consuming the next time length a.

S711: The Charging Center sends an Update-Credit-Control-Answer (update CCA(a)) to the SCP.

Steps S708 and S711 are repeated during the call of the user, and the process proceeds to S712 when the user hangs up the call.

S712: The SSP reports an ACR event.

S713: The SCP sends to the Charging Center a Terminate-Credit-Control- Request (termination CCR), which includes the time length of the call.

S714: The Charging Center finishes charging, and terminates the call.

S715: The Charging Center sends a Terminate-Credit-Control-Answer (termination CCA) to the SCP.

S716: The SSP reports the Hang-Up event.

S717: The SCP delivers a ReleaseCall to releases the call.

It should be noted that the scheme is not limited to the interaction protocol between the Charging Center and the SCP, and any other protocols may be employed. Moreover, the Charging Center is not limited to be an independent system, and may be incorporated with the SCP.

The technical solution of the embodiment of the present invention has the following advantages: the SSP performs timing by using the first time point, at which the Charging Request information is sent to the service control device, as the starting point for the second time slice, in this way, the charge error problem caused by the time error due to the interval between timings in the prior art is resolved.

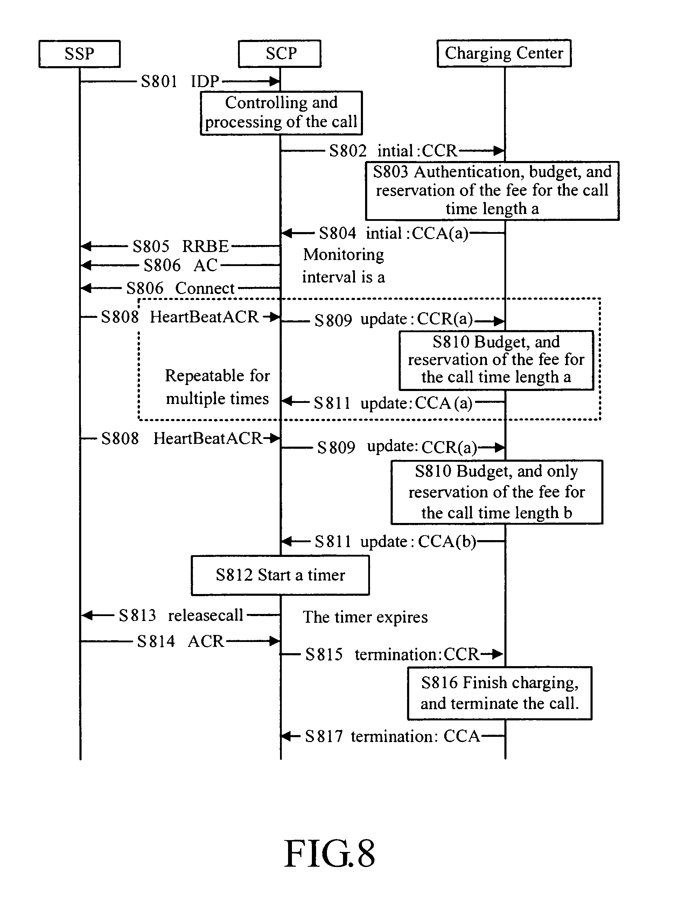

Fig.8 is illustrates a flowchart of a scheme for cutting off a call when the credit limit of a user is exhausted according to an embodiment of the present invention.

During the call of the user, an SCP actively cuts off the call due to insufficient amount of the remaining balance of the user, etc. The signaling interaction as shown in Fig.8 includes the following steps.

S801: An SSP triggers a service, and reports an IDP to an SCP.

S802: The SCP initiates an Initial-Credit-Control-Request (initial CCR) to a Charging Center.

S803: The Charging Center performs authentication on the user, calculates a length a of a communication time slice, and reserves the fee for the time length a.

S804: The Charging Center sends to the SCP an Initial-Credit-Control- Answer, which includes the time length a of the communication time slice.

S805: The SCP delivers an EDP event monitor.

S806: The SCP delivers an AC, in which the reporting interval is set to be the time length a.

S807: The SCP delivers a Connect message to connect the called party. After the called party unhooks to accept the call, the connection establishment of communication service is completed.

S808: When the time length of the call reaches the time length a, the SSP reports a HeartBeatACR to the SCP.

S809: The SCP sends a Update-Credit-Control-Request message to the Charging Center, and informs the Charging Center of the consumption of the time length a.

S810: The Charging Center updates the credit control, and reserves the fee for consuming the next time length a.

S811: The Charging Center sends an Update-Credit-Control-Answer to the SCP.

Steps S808 and S811 are repeated during the call of the user. In steps S810 and S811, when the remaining balance of the user is not sufficient for the time length a of one time slice, the Charging Center informs, in the Update-Credit-Control- Answer message, the SCP that it is the last time slice and the available time length is b.

In practice, the Charging Center may not inform the SCP of the insufficiency of the remaining balance by way of the last time slice. Instead, the SCP is allowed to reapplies for a communication time slice, and when the communication time slice is reapplied, an error message is returned, so as to control the call time. This variation also falls into the protection scope of the present invention.

S812: The SCP starts a timer with a timing length of b.

S813: When the timer expires, the SCP delivers a ReleaseCall.

S814: The SSP reports an ACR.

S815: The SCP sends to the Charging Center a Terminate-Credit-Control- Request, which includes a call time length.

S816: The Charging Center finishes charging, and terminates the call.

S817: The Charging Center sends a Terminate-Credit-Control-Answer to the SCP.

It should be noted that in practice the step S817 may be omitted, that is, the last Credit-Control-Answer termination message is not required. Since the Charging Center has known the actual call time length, this variation may have no effect on the protection scope of the present invention.

It should be noted that the scheme is not limited to the interaction protocol between the Charging Center and the SCP, any other protocols may be employed. Moreover, the Charging Center is not limited to be an independent system, and may be incorporated with the SCP.

The technical solution of the embodiment of the present invention has the following advantages: the SSP performs timing by using the first time point, at which the charging request information is sent to the service control device, as the starting point for the second time slice, in this way, the charge error problem caused by the time error due to the interval between timings in the prior art is resolved.

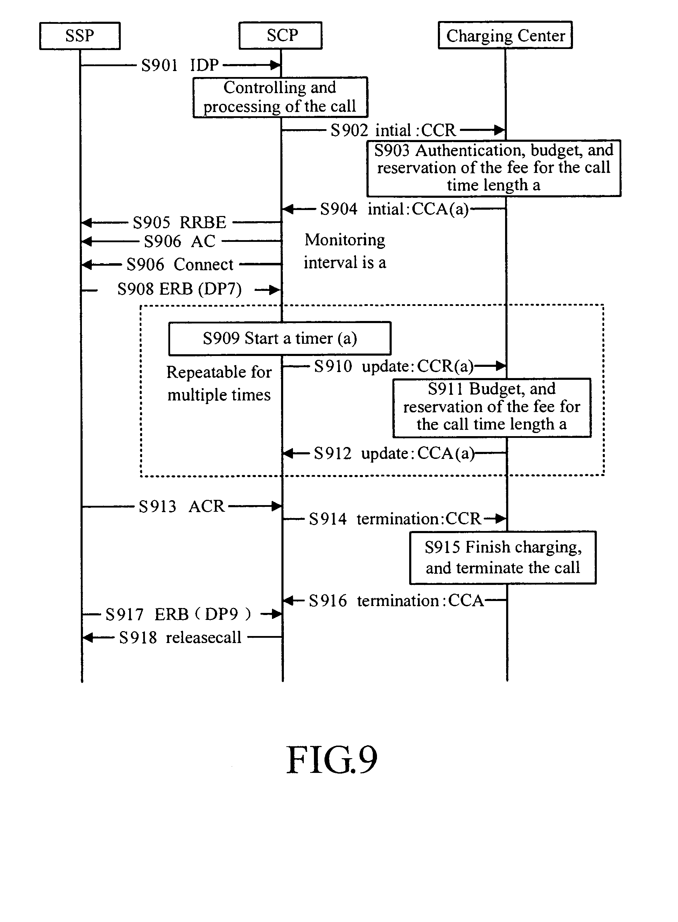

In another aspect, there are other implementing methods for the above technical solutions of the present invention. When the SCP monitors an answer event of the called party and controls the time length of the time slice, the SCP doesn't use a HeartBeatACR to control the sliced call time length, instead, the SCP controls the call time length by timing after the answer event of the called party. The specific implementing flowchart is as shown in Fig.9. In the case that a user normally hangs up, a flowchart of a time-sliced charging method is provided in an embodiment of the present invention. The method includes the following steps.

S901: An SSP triggers a service, and reports an IDP to an SCP.

S902: The SCP initiates an Initial-Credit-Control-Request (initial: CCR) to a Charging Center.

S903: The Charging Center performs authentication on the user, calculates a time length a of a communication time slice, and reserves the fee for the time length a.

S904: The Charging Center sends to the SCP an Initial-Credit-Control- Answer, which includes the time length a of the communication time slice.

S905: The SCP delivers an EDP event monitor.

S906: The SCP delivers an AC.

S907: The SCP delivers a Connect message to connect the called party. After the called party unhooks to accept the call, the connection establishment of communication service is completed.

S908: After the connection establishment is completed, the SSP sends a connection confirmation message to the SCP to confirm that the connection establishment is completed.

S909: The SCP starts a timer with a timing length being set to be the time length a of the communication time slice.

S910: When the timer passes the time length a, that is, a timing procedure is completed, the SCP sends an Update-Credit-Control-Request message to the Charging Center and informs the Charging Center of the consumption of the time length a.

S911: The Charging Center updates the credit control, and reserves the fee for consuming the next time length a.

S912: The Charging Center sends an Update-Credit-Control-Answer to the SCP.

Steps S909 and S912 are repeated during the call of the user. If the user hangs up, then proceeding to step S913

S913: The SSP reports an ACR event.

S914: The SCP sends to the Charging Center a Tenninate-Credit-Control- Request, which includes a call time length.

S915: The Charging Center finishes charging, and terminates the call.

S916: The Charging Center sends a Tenninate-Credit-Control-Answer to the SCP.

S917: The SSP reports the hanging up event.

S918: The SCP delivers a ReleaseCall to release the call.

It should be noted that the scheme is not limited to the interaction protocol between the Charging Center and the SCP, and any other protocols may be employed. Moreover, the Charging Center is not limited to be an independent system, and may be incorporated with the SCP.

The technical solution of the embodiment of the present invention has the following advantages: the SCP calculates the second time length from the first time length and the error time value so that the SSP performs timing according to the second time length of the second time slice, in this way, the charge error problem caused by the time error due to the interval between timings in the prior art is resolved.

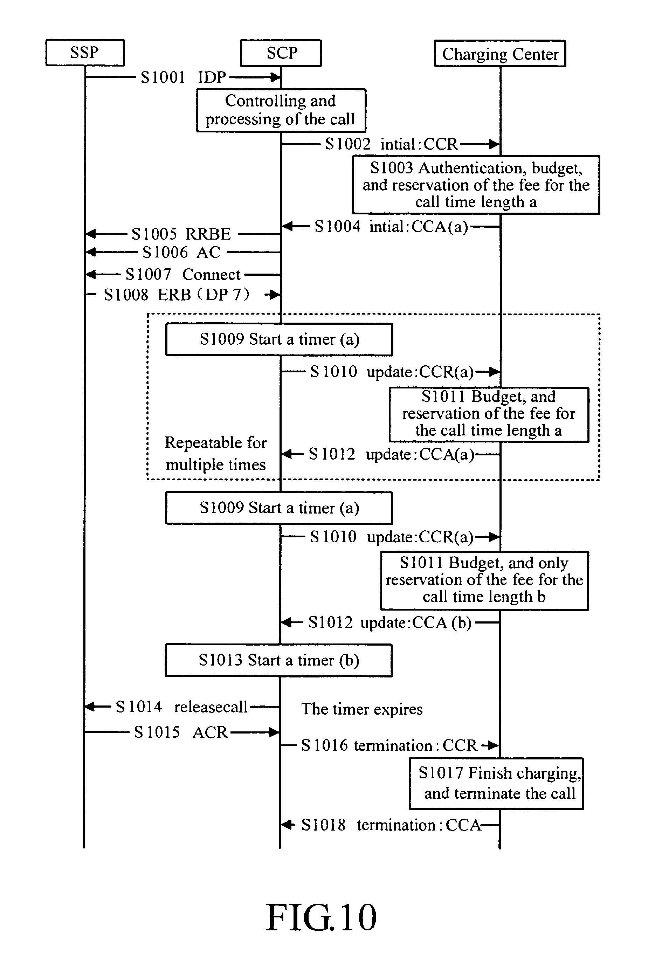

When the SCP monitors an answer event of the called party and controls the time length of the time slice, it doesn't use a HeartBeatACR to control the sliced call time length, instead, it controls the call time length by timing after receiving the answer event of the called party. In such a scheme, in the case that the call is cut off upon the credit limit of the user is exhausted, a time-sliced charging method is provided in an embodiment of the present invention, as shown in Fig. 10.

During the call between users, an SCP actively cuts off the call due to insufficient amount of the remaining balance of a user, etc. The signaling interaction as shown in Fig. 10 includes the following steps.

S1001: An SSP triggers a service, and reports an IDP to an SCP.

S1002: The SCP initiates an Initial-Credit-Control-Request (initial: CCR) to a Charging Center.

S1003: The Charging Center performs authentication on the user, calculates a length a of a communication time slice, and reserves the fee for the time length a.

S1004: The Charging Center sends to the SCP an Initial-Credit-Control- Answer , which includes the time length a of the communication time slice.

S1005: The SCP delivers an EDP event monitor.

S1006: The SCP delivers an AC.

S1007: The SCP delivers a Connect message to connect the called party. Afte the called party unhooks to accept the call, the connection establishment of communication service is completed.

S1008: After the connection establishment is completed, the SSP sends a connection confirmation message to the SCP to confirm that the connection establishment is completed.

S1009: The SCP starts a timer with a timing length being set to be the time length a of the communication time slice.

S1010: When the timer passes the time length a, that is, a timing procedure is completed, the SCP sends an Update-Credit-Control-Request message to the Charging Center and informs the Charging Center of the consumption of the time length a.

S1011: The Charging Center updates the credit control and reserves the fee for consuming the next time length a.

S1012: The Charging Center sends an Update-Credit-Control-Answer to the SCP.

Steps S1009 and S1012 are repeated during the call of the user. In steps S1011 and S1012, when the remaining balance of the user is not sufficient for the time length a of one time slice, the Charging Center informs, in the Update-Credit- Control-Answer message, the SCP that it is the last time slice and the available time length is b.

In practice, the Charging Center may not inform the SCP of the insufficiency of the remaining balance by way of the last time slice. Instead, the SCP is allowed to reapplies for a communication time slice, and when the communication time slice is reapplied, an error message is returned, so as to control the time of the cal This variation also falls into the protection scope of the present invention.

S1013: The SCP starts a timer with a timing length of b.

S1014: When the timer expires, the SCP delivers a ReleaseCall.

S1015: The SSP reports an ACR.

S1016: The SCP sends to the Charging Center a Terminate-Credit-Control- Request, which includes a call time length.

S1017: The Charging Center finishes charging, and terminates the call.

S1018: The Charging Center sends a Terminate-Credit-Control-Answer to the SCP.

It should be noted that in practice the step S1018 may be omitted, that is, the last Credit-Control-Answer termination message is not required. Since the Charging Center has known the actual call time length, this variation may have no effect on the protection scope of the present invention.

It should be noted that the scheme is not limited to the interaction protocol between the Charging Center and the SCP, and any other protocols may be employed. Moreover, the Charging Center is not limited to be an independent system, and may be incorporated with the SCP.

The technical solution of the embodiment of the present invention has the following advantages: the SCP calculates the second time length from the first time length and the error time value so that the SSP times according to the second time length of the second time slice; in this way, the charge error problem caused by the time error due to the interval between timings in the prior art is resolved.

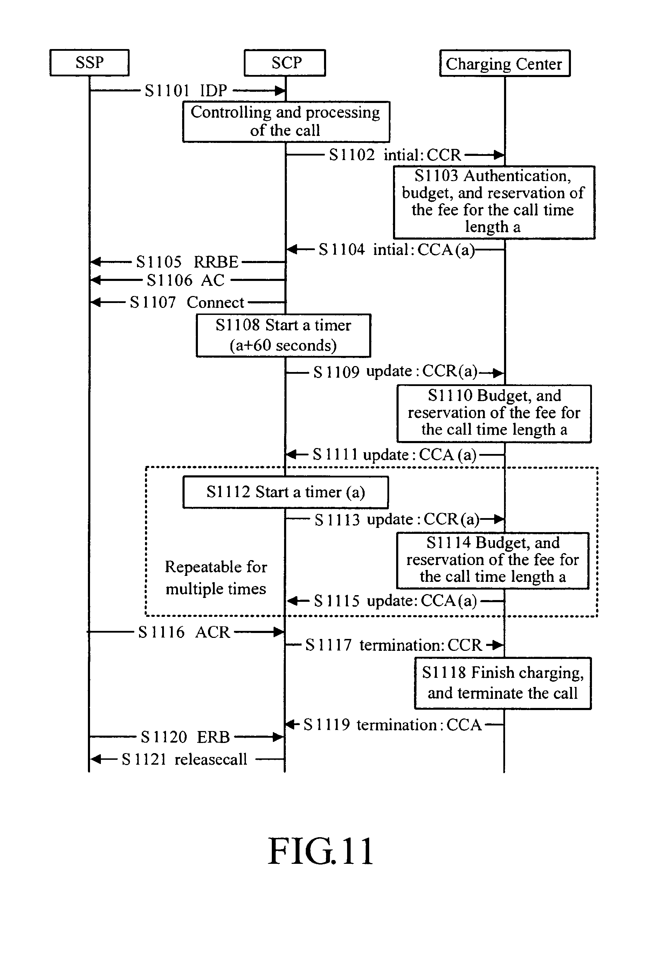

In another aspect, there are other implementing methods for the above technical solutions of the present invention, where the SCP controls the time length of the time slice without monitoring the answer event of the called party. The implementing procedure is as shown in Fig.11. In the case that a user normally hangs up, a time-sliced charging method is provided in an embodiment of the present invention.

The difference between the current technical solution and the above technical solutions lies in that: the SCP does not monitor the answer event of the called party; instead, the SCP directly starts timing upon delivering the Connection message. Since the actual answer time of the called party may be delayed for one minute (a user may have a period of no answer for at most one minute), the first timing length of the timer may be one minute longer than the time length of the time slice, and the time length reported to the Charging Center remains unchanged. After an ACR is reported, the time length reported to the Charging Center is corrected according to the time length in the ACR. The method includes the following steps.

S1101: An SSP triggers a service, and reports an IDP to an SCP.

S1102: The SCP initiates an Initial-Credit-Control-Request (initial CCR) to a Charging Center.

S1103: The Charging Center performs authentication on the user, calculates a time length a of a communication time slice, and reserves the fee for the time length a.

S1104: The Charging Center sends to the SCP an Initial-Credit-Control- Answer , which includes the time length a of the communication time slice.

S1105: The SCP delivers an EDP event monitor.

S1106: The SCP delivers an AC.

S1107: The SCP directly starts a timer, and the timing length of the timer includes the time length a of the communication time slice and the calling delay time, and particularly equals to a+60 seconds in the embodiment.

In the embodiment, since the actual answer time of the called party may be delayed for one minute (the user may have a period of no answer for at most one minute), the first timing length of the timer may be one minute longer than the time length of the time slice, and the time length reported to the Charging Center remains unchanged.

Furthermore, in a specific scenario, the delay time may be another time value, and this variation may have no effect on the protection scope of the present invention.

S1108: The SCP delivers a Connect message to connect the called party.

It should be noted that steps S1107 and S1108 may be performed in any order. Adjustment may be performed as needed in specific scenarios, this variation have no effect on the protection scope of the present invention.

S1109: When the timer passes a+60 seconds, that is, a timing procedure is completed, the SCP sends a Update-Credit-Control-Request message to the Charging Center and informs the Charging Center of the consumption of the time length a.

S1110: The Charging Center updates the credit control, and reserves the fee for consuming the next time length a.

S1111: The Charging Center sends an Update-Credit-Control-Answer to the SCP.

S1112: After receiving the updated Credit-Control-Answer, the SCP starts the timer, and the timing length of the timer is set to be the time length a of the communication time slice.

Since it is not the first time connection, the set timing length of the timer no longer includes the delay time.

S1113: When the timer passes the time length a, that is, a timing procedure is completed, the SCP sends an Update-Credit-Control-Request message to the Charging Center and informs the Charging Center of the consumption of the time length a.

S1114: The Charging Center updates the credit control, and reserves the fee for consuming the next time length a.

S1115: The Charging Center sends the Update-Credit-Control-Answer to the SCP.

Steps S1112 and S1115 are repeated during the call of the user. If the user hangs up, then proceeding to step S1116.

S1116: The SSP reports an ACR event.

S1117: The SCP sends to the Charging Center a Terminate-Credit-Control- Request, which includes a call time length.

S1118: The Charging Center finishes charging, and terminates the call.

S1119: The Charging Center sends a Terminate-Credit-Control-Answer to the SCP.

S1120: The SSP reports the hanging up event.

S1121: The SCP delivers a ReleaseCall, and releases the call.

It should be noted that the scheme is not limited to the interaction protocol between the Charging Center and the SCP, any other protocols may be employed. Moreover, the Charging Center is not limited to be an independent system, and may be incorporated with an SCP.

The technical solution of the embodiment of the present invention has the following advantages: the SCP calculates the second time length from the first time length and the error time value so that the SSP performs timing according to the second time length of the second time slice, in this way, the charge error problem caused by the time error due to the interval between timings in the prior art is resolved.

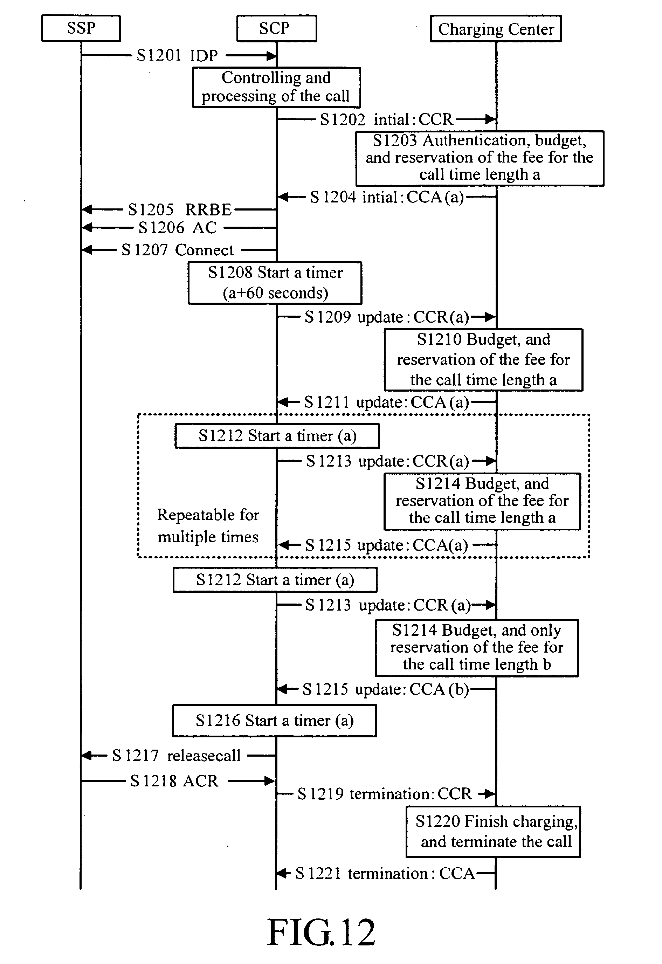

As shown in Fig.12, for the technical solution in which the SCP controls the time length of the time slice without monitoring the answer event of the called party, in the case that the call is cut off upon the credit limit of a user is exhausted, a time-sliced charging method is provided in an embodiment of the present invention.

During the call of the user, the SCP actively cuts off the call due to the insufficient amount of the remaining balance of the user. The signaling interaction as shown in Fig.12 includes the following steps.

S1201: An SSP triggers a service, and reports an IDP to an SCP.

S1202: The SCP initiates an Initial-Credit-Control-Request (initial CCR) to a Charging Center.

S1203: The Charging Center performs authentication on the user, calculates a time length a of a communication time slice, and reserves the fee for the time length a.

S1204: The Charging Center sends to the SCP an Initial-Credit-Control-Answer, which includes the time length a of the communication time slice.

S1205: The SCP delivers an EDP event monitor.

S1206: The SCP delivers an AC.

S1207: The SCP delivers a Connect message to connect the called party. After the called party unhooks to accept the call, the connection establishment of communication service is completed.

S1208: The SCP directly starts a timer upon delivering the Connect message, the timing length of the timer includes the time length a of the communication time slice and the calling delay time, and equals to a+60 seconds in the embodiment.

In the embodiment, since the actual answer time of the called party may be delayed for one minute (a user may have a period of no answer for at most one minute), the first timing length of the timer may be one minute longer than the time length of the time slice, and the time length reported to the Charging Center remains unchanged.

Furthermore, in a specific scenario, the delay time may be other time value, and this variation may have no effect on the protection scope of the present invention.

S1209: When the timer passes a+60 seconds, that is, a timing procedure is completed, the SCP sends an Update-Credit-Control-Request message to the Charging Center and informs the Charging Center of the consumption of the time length a.

S1210: The Charging Center updates the credit control, and reserves the fee for consuming the next time length a.

S1211: The Charging Center sends an Update-Credit-Control-Answer to the SCP.

S1212: After receiving the updated Credit-Control-Answer, the SCP starts a timer, and the timing length of the timer is set to the time length a of the communication time slice.

Since it is not the first time connection, the set timing length of the timer no longer includes the delay time.

S1213: When the timer passes time a, that is, a timing procedure is completed, the SCP sends an Update-Credit-Control-Request message to the Charging Center and informs the Charging Center of the consumption of the time length a.

S1214: The Charging Center updates the credit control, and reserves the fee for consuming the next time length a.

S1215: The Charging Center sends an Update-Credit-Control-Answer message to the SCP.

Steps S1212 and S1215 are repeated during the call of the user. In steps S1214 and S1215, when the remaining balance of the user is not sufficient for the time length a of one time slice, the Charging Center informs, in the Update-Credit- Control-Answer message, the SCP that it is the last time slice and the available time length is b.

In practice, the Charging Center may not inform the SCP of the insufficiency of the remaining balance by way of the last time slice. Instead, the SCP is allowed to reapply a communication time slice, and when the communication time slice is reapplied, an error message is returned, so as to control the call time. This variation also falls into the protection scope of the present invention.

S1216: The SCP starts a timer with a timing length of b.

S1217: When the timer expires, the SCP delivers a ReleaseCall.

S1218: The SSP reports an ACR.

S1219: The SCP sends to the Charging Center a Terminate-Credit-Control- Request, which includes a call time length.

S1220: The Charging Center finishes charging, and terminates the call.

S1221: The Charging Center sends a Terminate-Credit-Control-Answer to the SCP.

It should be noted that in practice the step S1221 may be omitted, that is, the last Credit-Control-Answer termination message is not required. Since the Charging Center has known the actual call time length, this variation may have no effect on the protection scope of the present invention.

It should be noted that the scheme is not limited to the interaction protocol between the Charging Center and the SCP, and any other protocols may be employed. Moreover, the Charging Center is not limited to be an independent system, and may be incorporated with the SCP.

The technical solution of the embodiment of the present invention has the following advantages: the SCP calculates the second time length according to the first time length and the error time value so that the SSP performs timing according to the second time length, in this way, the charge error problem caused by the time error due to the interval between timings in the prior art is resolved.

It should be noted that, in practice, the communication time slice proposed in the fourth embodiment to the tenth embodiment of the present invention may also be replaced with a communication fee slice, that is, the SCP calculates the corresponding communication time according to the reserved communication fee slice returned by the Charging Center, and derives the corresponding communication time slice, so as to control the communication service time of the SSP. This variation may have no effect on the protection scope of the present invention.

Through the description of the above embodiments, it will be readily apparent to those skilled in the art that the present invention may be implemented by means of hardware, and may also be implemented by means of software plus general hardware platform. Based on this understanding, the technical solutions of the present invention may be embodied in the form of software product. The software product may be stored in a nonvolatile storage media, such as CD-ROM, U disk, removable disk, etc., which includes instructions for making a computing device, such as personal computer, server, or network device, etc., execute methods described in various embodiments of the present invention.

Those skilled in the art may understand that the accompanying drawings are just schematic diagrams of several preferred embodiments, and not all the modules or flows in the accompanying drawings are necessary for implementing the present invention.

Only preferred embodiments of the present invention are described above. It should be noted that, for those skilled in the art, modifications and variations may also be made without departing from the principle of the present invention, and these modifications and variations should also be interpreted as falling in the protection scope of the present invention.

## Claims

1. A method for online charging, comprising:
receiving, by a service switch device, a first time slice from a service control device (S101);
timing, by the service switch device, according to the first time slice (S102);
sending, by the service switch device, Charging Request information to the service control device at a first time point when the timing passes a first time length corresponding to the first time slice (S103);
receiving, by the service switch device, a second time slice from the service control device (S104); and
timing, by the service switch device, by using the first time point as a starting point for the second time slice (S105).

2. The method according to claim 1, wherein after sending Charging Request information to the service control device at the first time point, the method further comprises:
receiving, by the service control device, the Charging Request information (S604), setting the second time slice according to a time length returned by a Charging Center (S605), and sending the second time slice to the service switch device (S606).

3. The method according to claim 1 or 2, wherein the second time slice is the last time slice available to the user, and wherein after timing by using the first time point as the starting point for the second time slice, the method further comprises:
sending, by the service switch device, Charging Request information to the service control device when the timing passes a last time length corresponding to the last time slice, so that the service control device terminates communication service according to the Charging Request information (S607).

4. A method for online charging, comprising:
acquiring, by a service control device, an error time value in time length for a single Charging Request interaction process (S201);
requesting, by the service control device, a Charging Center to charge, and reserving a first time slice according to a time length returned by the Charging Center (S202);
calculating, by the service control device, a second time slice according to the first time slice and the error time value (S203); and
sending, by the service control device, the second time slice to a service switch device, so that the service switch device performs timing according to the second time slice (S204).

5. The method according to claim 4, wherein the error time value in time length for a single Charging Request interaction process comprises an error time value in time length due to interaction with the Charging Center and an error time value in time length due to interaction with the service switch device.

6. The method according to claim 4 or 5, wherein the calculating the second time slice according to the first time slice and the error time value comprises:
calculating, by the service control device, a difference value between the first time slice and the error time value, and using the difference value as the second time slice.

7. The method according to claim 4, 5 or 6, wherein after sending the second time slice to a service switch device, the method further comprises: receiving, by the service control device, Charging Request information from the service switch device (S604), and terminating communication service according to the Charging Request information (S608), wherein the second time slice is a difference value between the last time slice available to a user and the error time value.

8. A service switch device (31), comprising:
a receiving module (311), adapted to receive a time slice from a service control device, wherein the time slice comprises a first time slice and a second time slice;
a timing module (312), adapted to perform timing according to the time slice received by the receiving module; and
a sending module (313), adapted to send Charging Request information to the service control device at a time point corresponding to the time slice when the timing of the timing module passes a time length corresponding to the time slice.

9. The service switch device according to claim 8, wherein the second time slice is a last time slice available to a user, and wherein the sending module is further adapted to send Charging Request information to the service control device when the timing passes a last time length corresponding to the last time slice, so that the service control device terminates communication service according to the Charging Request information.

10. A system for online charging, comprising a service control device (32), and a service switch device (31) according to any one of claims 8 and 9.

11. A service control device (41), comprising:
an acquiring module (411), adapted to acquire an error time value in time length for a single Charging Request interaction process;
a reserving module (412), adapted to request a Charging Center to charge, and reserve a first time slice according to a time length returned by the Charging Center;
a calculating module (413), adapted to calculate a second time slice according to the first time slice reserved by the reserving module and the error time value acquired by the acquiring module; and
a sending module (414), adapted to send the second time slice calculated by the calculating module to a service switch device, so that the service switch device performs timing according to the second time slice.

12. The service control device according to claim 11, wherein the error time value in time length for a single Charging Request interaction process comprises an error time value in time length due to interaction with the Charging Center and an error time value in time length due to interaction with the service switch device.

13. The service control device according to claim 11 or 12, wherein the calculating module is further adapted to calculate a difference value between the first time slice and the error time value, wherein the difference value is used as the second time slice.

14. The service control device according to claim 11, 12 or 13, wherein the second time slice is a difference value between the last time slice available to a user and the error time value, the service control device further comprises:
a terminating module (415), adapted to receive Charging Request information from the service switch device, and terminate communication service according to the Charging Request information.

15. A system for online charging, comprising a service switch device (42), and a service control device (41) according to any one of claims 11-14.

## Patentansprüche

1. Verfahren zur Online-Vergebührung, mit den folgenden Schritten:
Empfangen einer ersten Zeitscheibe durch eine Dienstschalteinrichtung von einer Dienststeuereinrichtung (S101);
Timen durch die Dienstschalteinrichtung gemäß der ersten Zeitscheibe (S102);
Senden von Vergebührungsanforderungsinformationen durch die Dienstschalteinrichtung zu der Dienststeuereinrichtung zu einem ersten Zeitpunkt, wenn das Timing an einer ersten Zeitlänge vorbeigeht, die der ersten Zeitscheibe entspricht (S103);
Empfangen einer zweiten Zeitscheibe durch die Dienstschalteinrichtung von der Dienststeuereinrichtung (S104); und
Timen durch die Dienstschalteinrichtung durch Verwendung des ersten Zeitpunkts als Startpunkt für die zweite Zeitscheibe (S105).

2. Verfahren nach Anspruch 1, wobei das Verfahren nach dem Senden von Vergebührungsanforderungsinformationen zu der Dienststeuereinrichtung zu dem ersten Zeitpunkt ferner Folgendes umfasst:
Empfangen der Vergebührungsanforderungsinformationen durch die Dienst-Ateuereinrichtung (S604), Einstellen der zweiten Zeitscheibe gemäß einer von einer Vergebührungszentrale zurückgegebenen Zeitlänge (S605) und Senden der zweiten Zeitscheibe zu der Dienstschalteinrichtung (S606).

3. Verfahren nach Anspruch 1 oder 2, wobei die zweite Zeitscheibe die letzte dem Benutzer verfügbare Zeitscheibe ist und wobei das Verfahren nach dem Timen durch Verwendung des ersten Zeitpunkts als Startpunkt für die zweite Zeitscheibe ferner Folgendes umfasst:
Senden von Vergebührungsanforderungsinformationen durch die Dienstschalteinrichtung zu der Dienststeuereinrichtung, wenn das Timing an einer letzten Zeitlänge vorbeigeht, die der letzten Zeitscheibe entspricht, sodass die Dienststeuereinrichtung Kommunikationsdienst gemäß den Vergebührungsanforderungsinformationen beendet (S607).

4. Verfahren zur Online-Vergebührung, mit den folgenden Schritten:
Beschaffen eines Fehlerzeitwerts der Zeitlänge durch eine Dienststeuereinrichtung für einen einzigen Vergebührungsanforderungs-Interaktionsprozess (S201);
Anfordern bei einer Vergebührungszentrale durch die Dienststeuereinrichtung zu vergebühren und Reservieren einer ersten Zeitscheibe gemäß einer von der Vergebührungszentrale zurückgegebenen Zeitlänge (S202);
Berechnen einer zweiten Zeitscheibe durch die Dienststeuereinrichtung gemäß der ersten Zeitscheibe und dem Fehlerzeitwert (S203); und
Senden der zweiten Zeitscheibe durch die Dienststeuereinrichtung zu einer Dienstschalteinrichtung, sodass die Dienstschalteinrichtung Timing gemäß der zweiten Zeitscheibe durchführt (S204).

5. Verfahren nach Anspruch 4, wobei der Fehlerzeitwert der Zeitlänge für einen einzigen Vergebührungsanforderungs-Interaktionsprozess einen Fehlerzeitwert der Zeitlänge aufgrund von Interaktion mit der Vergebührungszentrale und einen Fehlerzeitwert der Zeitlänge aufgrund von Interaktion mit der Dienstschalteinrichtung umfasst.

6. Verfahren nach Anspruch 4 oder 5, wobei das Berechnen der zweiten Zeitscheibe gemäß der ersten Zeitscheibe und dem Fehlerzeitwert Folgendes umfasst:
Berechnen eines Differenzwerts durch die Dienststeuereinrichtung zwischen der ersten Zeitscheibe und dem Fehlerzeitwert und Verwenden des Differenzwerts als die zweite Zeitscheibe.

7. Verfahren nach Anspruch 4, 5 oder 6, wobei das Verfahren nach dem Senden der zweiten Zeitscheibe zu einer Dienstschalteinrichtung ferner Folgendes umfasst:
Empfangen von Vergebührungsanforderungsinformationen durch die Dienststeuereinrichtung von der Dienstschalteinrichtung (S604) und Beenden des Kommunikationsdienstes gemäß den Vergebührungsanforderungsinformationen (S608), wobei die zweite Zeitscheibe ein Differenzwert zwischen der letzten einem Benutzer verfügbaren Zeitscheibe und dem Fehlerzeitwert ist.

8. Dienstschalteinrichtung (31), umfassend:
ein Empfangsmodul (311), das dafür ausgelegt ist, eine Zeitscheibe von einer Dienststeuereinrichtung zu empfangen, wobei die Zeitscheibe eine erste Zeitscheibe und eine zweite Zeitscheibe umfasst;
ein Timing-Modul (312), das dafür ausgelegt ist, Timing gemäß der durch das Empfangsmodul empfangenen Zeitscheibe durchzuführen; und
ein Sendemodul (313), das dafür ausgelegt ist, Vergebührungsanforderungsinformationen zu der Dienststeuereinrichtung zu einem Zeitpunkt zu senden, der der Zeitscheibe entspricht, wenn das Timing des Timing-Moduls an einer Zeitlänge vorbeigeht, die der Zeitscheibe entspricht.

9. Dienstschalteinrichtung nach Anspruch 8, wobei die zweite Zeitscheibe eine letzte einem Benutzer verfügbare Zeitscheibe ist und wobei das Sendemodul ferner dafür ausgelegt ist, Vergebührungsanforderungsinformationen zu der Dienststeuereinrichtung zu senden, wenn das Timing an einer Zeitlänge vorbeigeht, die der letzten Zeitscheibe entspricht, sodass die Dienststeuereinrichtung Kommunikation gemäß den Vergebührungsanforderungsinformationen beendigt.

10. System zur Online-Vergebührung, umfassend eine Dienststeuereinrichtung (32) und eine Dienstschalteinrichtung (31) nach einem der Ansprüche 8 und 9.

11. Dienststeuereinrichtung (41), umfassend:
ein Beschaffungsmodul (411), das dafür ausgelegt ist, einen Fehlerzeitwert der Zeitlänge für einen einzigen Vergebührungsanforderungs-Interaktionsprozess zu beschaffen;
ein Reserviermodul (412), das dafür ausgelegt ist, von einer Vergebührungszentrale anzufordern zu vergebühren, und gemäß einer von der Vergebührungszentrale zurückgegebenen Zeitlänge eine erste Zeitscheibe zu reservieren;
ein Berechnungsmodul (413), das dafür ausgelegt ist, gemäß der durch das Reserviermodul reservierten ersten Zeitscheibe und dem durch das Beschaffungsmodul beschafften Fehlerzeitwert eine zweite Zeitscheibe zu berechnen; und
ein Sendemodul (414), das dafür ausgelegt ist, die durch das Berechnungsmodul berechnete zweite Zeitscheibe zu einer Dienstschalteinrichtung zu senden, sodass die Dienstschalteinrichtung Timing gemäß der zweiten Zeitscheibe durchführt.

12. Dienststeuereinrichtung nach Anspruch 11, wobei der Fehlerzeitwert der Zeitlänge für einen einzigen Vergebührungsanforderungs-Interaktionsprozess einen Fehlerzeitwert der Zeitlänge aufgrund von Interaktion mit der Vergebührungszentrale und einen Fehlerzeitwert der Zeitlänge aufgrund von Interaktion mit der Dienstschalteinrichtung umfasst.

13. Dienststeuereinrichtung nach Anspruch 11 oder 12, wobei das Berechnungsmodul ferner dafür ausgelegt ist, einen Differenzwert zwischen der ersten Zeitscheibe und dem Fehlerzeitwert zu berechnen, wobei der Differenzwert als die zweite Zeitscheibe verwendet wird.

14. Dienststeuereinrichtung nach Anspruch 11, 12 oder 13, wobei die zweite Zeitscheibe ein Differenzwert zwischen der letzten einem Benutzer verfügbaren Zeitscheibe und dem Fehlerzeitwert ist, wobei die Dienststeuereinrichtung ferner Folgendes umfasst:
ein Beendigungsmodul (415), das dafür ausgelegt ist, Vergebührungsanforderungsinformationen von der Dienstschalteinrichtung zu empfangen und Kommunikationsdienst gemäß den Vergebührungsanforderungsinformationen zu beendigen.

15. System zur Online-Vergebührung, umfassend eine Dienstschalteinrichtung (42) und eine Dienststeuereinrichtung (41) nach einem der Ansprüche 11-14.

## Revendications

1. Procédé de facturation en ligne, comprenant :
la réception, par un dispositif de commutation de service, d'une première tranche de temps depuis un dispositif de commande de service (S101) ;
le minutage, par le dispositif de commutation de service, en fonction de la première tranche de temps (S102) ;
l'envoi, par le dispositif de commutation de service, d'informations de Requête de Facturation au dispositif de commande de service à un premier point temporel quand le minutage dépasse une première longueur de temps correspondant à la première tranche de temps (S103) ;
la réception, par le dispositif de commutation de service, d'une seconde tranche de temps depuis le dispositif de commande de service (S104) ; et
le minutage, par le dispositif de commutation de service, en utilisant le premier point temporel comme point de départ de la seconde tranche de temps (S105).

2. Procédé selon la revendication 1, dans lequel après l'envoi d'informations de Requête de Facturation au dispositif de commande de service au premier point temporel, le procédé comprend en outre :
la réception, par le dispositif de commande de service, des informations de Requête de Facturation (S604), l'établissement de la seconde tranche de temps en fonction d'une longueur de temps renvoyée par un Centre de Facturation (S605), et l'envoi de la seconde tranche de temps au dispositif de commutation de service (S606).

3. Procédé selon la revendication 1 ou 2, dans lequel la seconde tranche de temps est la dernière tranche de temps dont dispose l'utilisateur, et dans lequel après le minutage en utilisant le premier point temporel comme point de départ de la seconde tranche de temps, le procédé comprend en outre :
l'envoi, par le dispositif de commutation de service, d'informations de Requête de Facturation au dispositif de commande de service quand le minutage dépasse une dernière longueur de temps correspondant à la dernière tranche de temps, de telle sorte que le dispositif de commande de service mette fin au service de communication en fonction des informations de Requête de Facturation (S607).

4. Procédé de facturation en ligne, comprenant :
l'acquisition, par un dispositif de commande de service, d'une valeur de temps d'erreur en longueur de temps pour un processus d'interaction de Requête de Facturation unique (S201) ;
la demande, par le dispositif de commande de service, à un Centre de Facturation de facturer, et la réservation d'une première tranche de temps en fonction d'une longueur de temps renvoyée par le Centre de Facturation (S202) ;
le calcul, par le dispositif de commande de service, d'une seconde tranche de temps en fonction de la première tranche de temps et de la valeur de temps d'erreur (S203) ; et
l'envoi, par le dispositif de commande de service, de la seconde tranche de temps à un dispositif de commutation de service, de telle sorte que le dispositif de commutation de service effectue un minutage en fonction de la seconde tranche de temps (S204).

5. Procédé selon la revendication 4, dans lequel la valeur de temps d'erreur en longueur de temps pour un processus d'interaction de Requête de Facturation unique comprend une valeur de temps d'erreur en longueur de temps due à une interaction avec le Centre de Facturation et une valeur de temps d'erreur en longueur de temps due à l'interaction avec le dispositif de commutation de service.

6. Procédé selon la revendication 4 ou 5, dans lequel le calcul de la seconde tranche de temps en fonction de la première tranche de temps et de la valeur de temps d'erreur comprend :
le calcul, par le dispositif de commande de service, d'une valeur de différence entre la première tranche de temps et la valeur de temps d'erreur, et l'utilisation de la valeur de différence comme seconde tranche de temps.

7. Procédé selon la revendication 4, 5 ou 6, dans lequel après l'envoi de la seconde tranche de temps à un dispositif de commutation de service, le procédé comprend en outre : la réception, par le dispositif de commande de service, d'informations de Requête de Facturation depuis le dispositif de commutation de service (S604), et l'arrêt du service de communication en fonction des informations de Requête de Facturation (S608), dans lequel la seconde tranche de temps est une valeur de différence entre la dernière tranche de temps dont dispose l'utilisateur et la valeur de temps d'erreur.

8. Dispositif de commutation de service (31), comprenant :
un module de réception (311), adapté pour recevoir une tranche de temps depuis un dispositif de commande de service, la tranche de temps comprenant une première tranche de temps et une seconde tranche de temps ;
un module de minutage (312), adapté pour effectuer un minutage en fonction de la tranche de temps reçue par le module de réception ; et
un module d'envoi (313), adapté pour envoyer des informations de Requête de Facturation au dispositif de commande de service à un point temporel correspondant à la tranche de temps quand le minutage du module de minutage dépasse une longueur de temps correspondant à la tranche de temps.

9. Dispositif de commutation de service selon la revendication 8, dans lequel la seconde tranche de temps est une dernière tranche de temps dont dispose l'utilisateur, et dans lequel le module d'envoi est adapté en outre pour envoyer des informations de Requête de Facturation au dispositif de commande de service quand le minutage dépasse une dernière longueur de temps correspondant à la dernière tranche de temps, de telle sorte que le dispositif de commande de service mette fin au service de communication en fonction des informations de Requête de Facturation.

10. Système de facturation en ligne, comprenant un dispositif de commande de service (32), et un dispositif de commutation de service (31) selon l'une quelconque des revendications 8 et 9.

11. Dispositif de commande de service (41), comprenant :
un module d'acquisition (411), adapté pour acquérir une valeur de temps d'erreur en longueur de temps pour un processus d'interaction de Requête de Facturation unique ;
un module de réservation (412), adapté pour demander à un Centre de Facturation de facturer, et réserver une première tranche de temps en fonction d'une longueur de temps renvoyée par le Centre de Facturation ;
un module de calcul (413), adapté pour calculer une seconde tranche de temps en fonction de la première tranche de temps réservée par le module de réservation et de la valeur de temps d'erreur acquise par le module d'acquisition ; et
un module d'envoi (414), adapté pour envoyer la seconde tranche de temps calculée par le module de calcul à un dispositif de commutation de service, de telle sorte que le dispositif de commutation de service effectue un minutage en fonction de la seconde tranche de temps.

12. Dispositif de commande de service selon la revendication 11, dans lequel la valeur de temps d'erreur en longueur de temps pour un processus d'interaction de Requête de Facturation unique comprend une valeur de temps d'erreur en longueur de temps due à une interaction avec le Centre de Facturation et une valeur de temps d'erreur en longueur de temps due à l'interaction avec le dispositif de commutation de service.

13. Dispositif de commande de service selon la revendication 11 ou 12, dans lequel le module de calcul est adapté en outre pour calculer une valeur de différence entre la première tranche de temps et la valeur de temps d'erreur, la valeur de différence étant utilisée comme seconde tranche de temps.

14. Dispositif de commande de service selon la revendication 11, 12 ou 13, dans lequel la seconde tranche de temps est une valeur de différence entre la dernière tranche de temps dont dispose l'utilisateur et la valeur de temps d'erreur, le dispositif de commande de service comprenant en outre :
un module de terminaison (415), adapté pour recevoir les informations de Requête de Facturation depuis le dispositif de commutation de service, et mettre fin au service de communication en fonction des informations de Requête de Facturation.

15. Système de facturation en ligne, comprenant un dispositif de commutation de service (42), et un dispositif de commande de service (41) selon l'une quelconque des revendications 11 à 14.
